# EUROPEAN PATENT APPLICATION

(11) **EP 2 364 834 A1**
(43) Date of publication of application: **14.09.2011**
(21) Application number: 10153703.3
(22) Date of filing: 16.02.2010
(51) Int. Cl.: B29C 43/34, B32B 9/02, B32B 27/00, B32B 27/20, D06N 3/00

(54) **Method for making dissolvable synthetic leather**

(71) Applicant: Chaei Hsin Enterprise Co., Ltd., Taichung City 407 (TW)
(72) Inventor: WANG, SHUEI MU, Taichung City 407 (TW)
(74) Representative: Chaillot, Geneviève

(57) **Abstract**

A method for making dissolvable synthetic leather comprising the steps of a. providing combined material, wherein thermoplastic polymeric material and medium are mixed together to generate a combined material, the thermoplastic polymeric material and the medium are dissolvable; b. film forming, wherein a thermoplastic film is made of the combined material, and a metal guiding wheel with a cooling system is introduced to rotate for a certain rotating travel to convey the thermoplastic film toward a connecting position with a metal roller; c. joining together, wherein a dissolvable substrate is transported by the roller to be joined with the thermoplastic film with a predetermined temperature to obtain synthetic leather, during joining process, a cooled film is pressed to the substrate so that a surface of the film permeates into pores of the substrate in a monounsaturating manner.

## Description

### BACKGROUND OF THE INVENTION

### Field of the Invention

The present invention relates to a method for making dissolvable synthetic leather which can dissolve the synthetic leather completely.

### Description of the Prior Art

Conventional method for making synthetic leather is made of thermoplastic polyurethane material by using an extrusion machine or a rolling machine to form a laminate film, however such convectional method has the following defects:
1. The synthetic leather is not dissolvable to harm environment.
2. The formed film has uneven thickness and surface, having lower quality.
3. The synthetic leather is solid that can not be feel comfortable.

The present invention has arisen to mitigate and/or obviate the afore-described disadvantages.

### SUMMARY OF THE INVENTION

The primary object of the present invention is to provide a method for making dissolvable synthetic leather which is capable of overcoming the shortcomings of the conventional method for making dissolvable synthetic leather thereof.

Another object of the present invention is to provide a method for making dissolvable synthetic leather which can dissolve the synthetic leather completely.

A method for making dissolvable synthetic leather in accordance with a first embodiment of the present invention comprises the steps of:
a. providing combined material, wherein thermoplastic polymeric material and medium are mixed together to generate a combined material, the thermoplastic polymeric material and the medium are dissolvable, and the medium is selected from agricultural and forestry waste, these wastes are mashes into fibers and powders;
b. film forming, wherein a thermoplastic film is made of the combined material, and a metal guiding wheel with a cooling system is introduced to rotate for a certain rotating travel so as to convey the thermoplastic film toward a connecting position with a metal roller, such that the thermoplastic film is cooled and pressed evenly, and the cooling system of the guiding wheel controls a temperature value of the thermoplastic film during the film is conveyed toward the roller;
c. joining together, wherein a dissolvable substrate is transported by the roller to be joined with the thermoplastic film with a predetermined temperature to obtain synthetic leather, during joining process, a cooled film is pressed to the substrate so that a surface of the film permeates into pores of the substrate in a monounsaturating manner.

A method for making dissolvable synthetic leather in accordance with a second embodiment of the present invention comprises the steps of:
a. providing combined material, wherein thermoplastic polymeric material and medium are mixed together to generate a combined material, the thermoplastic polymeric material and the medium are dissolvable, and the medium is selected from agricultural and forestry waste, these wastes are mashes into fibers and powders;
b. film forming, wherein a thermoplastic film is made of the combined material, and a metal guiding wheel with a cooling system is introduced to rotate for a certain rotating travel so as to convey the thermoplastic film toward a connecting position with a metal roller, such that the thermoplastic film is cooled and pressed evenly, and the cooling system of the guiding wheel controls a temperature value of the thermoplastic film during the film is conveyed toward the roller, and then the film is rolled by a guiding wheel to form synthetic leather.

### DETAILED DESCRIPTION OF THE PREFERRED EMBODIMENTS

The present invention will be clearer from the following description when viewed together with the accompanying drawings, which show, for purpose of illustrations only, the preferred embodiment in accordance with the present invention.

A method for making dissolvable synthetic leather according to a first embodiment of the present invention comprises the steps of:
a. Providing combined material, wherein thermoplastic polymeric material and medium are mixed together to generate a combined material, the medium is dissolvable and selected from agricultural and forestry waste, such as woods, branches, leaves, rice straws, rice hulls, wheat straws, wheat hulls, corn stems, corn stalks, sugarcane bagasses, bean dregs, etc., these wastes are mashes into fibers and powders, and the size of the powder of the medium is limited between 0.0013 mm to 0.83 mm, and the size of the fiber of the medium is limited between 0.83 mm to 8 mm, the medium occupies 10% to 75% of combined material. The thermoplastic polymeric material is selected from hydrolysis, dissolvable, harmless dissolving, and microorganisms decomposing material. And then an anti-oxidant, dispersant, and stabilizer are added into the thermoplastic polymeric material, the medium occupies 25% to 75% of combined material and is made of color masterbatch or color powder to obtain hydrolysis, dissolvable, harmless dissolvable, or microorganisms decomposable property, such that the film is flexible and solid. A foaming agent can be added to the combined material as well to enhance softness, and a coloring agent, anti fouling and bacterial agent or fire retardant is added into the combined material to achieve coloring, anti fouling and bacterial, and fire-retardant purpose.
b. Film forming, wherein a thermoplastic film is made of the combined material by using an extrusion machine or a rolling machine, and a metal guiding wheel with a cooling system is introduced to rotate for a certain rotating travel so as to convey the thermoplastic film toward a connecting position with a metal roller, wherein axial centers of the guiding wheel and the roller are parallel to each other so that the thermoplastic film is introduced within 1 to 89 degree of rotating travel of the guiding wheel, wherein the 0 degree of rotating travel of the guiding wheel is located at the connecting position of the guiding wheel and the roller, and 90 degree of rotating travel of the guiding wheel is located at a top end of the guiding wheel, such that the thermoplastic film is cooled and pressed evenly within the 1-89 degree of rotating travel, and the cooling system of the guiding wheel controls a temperature value of the thermoplastic film during the film is conveyed toward the roller.
c. Joining together, wherein a dissolvable substrate is transported by the roller to be joined with the thermoplastic film with a predetermined temperature to obtain synthetic leather. The substrate is selected from knit fabric, woven fabric, non-woven fabric, and water-jet fabric with hydrolysis, dissolvable, harmless dissolvable, or microorganisms decomposable property. During joining process, a cooled film is pressed to the substrate so that a surface of the film permeates into pores of the substrate in a monounsaturating manner, and the medium (such as fibers, powder) is used to lower a contacting area of the film and the substrate, hence the substrate is soft after being cooled to match with the film. It is to be noted that the corrugations of the film are decreased after joining with the substrate by using monounsaturated permeating method.
d. Surface treating, wherein the guiding wheel is mirror finished or pattern pressed to form a desired surface of synthetic leather, and then the synthetic leather is transfer printed and colored.

Thereby, the present invention can obtain the following advantages:
1. The synthetic leather is dissolvable completely, and the plant medium can increase hardness and flexibility and decrease the contacting area of the film and the substrate to keep softness.
2. The guiding wheel is used to form the film evenly and diminish its temperature to facilitate joining process, thus achieving high quality of synthetic leather with even thickness and surface so as to enhance use range, such as high class shoes, gloves, hats, and so on.

A method for making dissolvable synthetic leather according to a second embodiment of the present invention comprises the steps of:
a. Providing combined material, wherein thermoplastic polymeric material and medium are mixed together to generate a combined material , and the thermoplastic polymeric material and medium are dissolvable, wherein the medium is selected from agricultural and forestry waste, and these wastes are mashes into fibers and powders.
b. Film forming, wherein a thermoplastic film is made of the combined material, and a metal guiding wheel with a cooling system is introduced to rotate for a certain rotating travel so as to convey the thermoplastic film toward a connecting position with a metal roller, such that the thermoplastic film is cooled and pressed evenly within the rotating travel, and the cooling system of the guiding wheel controls a temperature value of the thermoplastic film during the film is conveyed toward the roller. Thereafter, the film is rolled by a guiding wheel to form synthetic leather.

While we have shown and described various embodiments in accordance with the present invention, it is clear to those skilled in the art that further embodiments may be made without departing from the scope of the present invention.

## Claims

1. A method for making dissolvable synthetic leather comprising the steps of:
a. providing combined material, wherein thermoplastic polymeric material and medium are mixed together to generate a combined material, the thermoplastic polymeric material and the medium are dissolvable, and the medium is selected from agricultural and forestry waste, these wastes are mashes into fibers and powders;
b. film forming, wherein a thermoplastic film is made of the combined material, and a metal guiding wheel with a cooling system is introduced to rotate for a certain rotating travel so as to convey the thermoplastic film toward a connecting position with a metal roller, such that the thermoplastic film is cooled and pressed evenly, and the cooling system of the guiding wheel controls a temperature value of the thermoplastic film during the film is conveyed toward the roller;
c. joining together, wherein a dissolvable substrate is transported by the roller to be joined with the thermoplastic film with a predetermined temperature to obtain synthetic leather, during joining process, a cooled film is pressed to the substrate so that a surface of the film permeates into pores of the substrate in a monounsaturating manner.

2. The method for making dissolvable synthetic leather as claimed in claim 1, wherein the substrate is selected from knit fabric, woven fabric, non-woven fabric, and water-jet fabric.

3. The method for making dissolvable synthetic leather as claimed in claim 1 further comprising the step of surface treating, wherein the guiding wheel is mirror finished or pattern pressed to form a desired surface of synthetic leather, and then the synthetic leather is transfer printed and colored.

4. A method for making dissolvable synthetic leather comprising the steps of:
a. providing combined material, wherein thermoplastic polymeric material and medium are mixed together to generate a combined material, the thermoplastic polymeric material and the medium are dissolvable, and the medium is selected from agricultural and forestry waste, these wastes are mashes into fibers and powders;
b. film forming, wherein a thermoplastic film is made of the combined material, and a metal guiding wheel with a cooling system is introduced to rotate for a certain rotating travel so as to convey the thermoplastic film toward a connecting position with a metal roller, such that the thermoplastic film is cooled and pressed evenly, and the cooling system of the guiding wheel controls a temperature value of the thermoplastic film during the film is conveyed toward the roller, and then the film is rolled by a guiding wheel to form synthetic leather.

5. The method for making dissolvable synthetic leather as claimed in claim 1, wherein an anti-oxidant, dispersant, and stabilizer are added into the thermoplastic polymeric material, and the medium occupies 25% to 75% of combined material.

6. The method for making dissolvable synthetic leather as claimed in claim 3, wherein an anti-oxidant, dispersant, and stabilizer are added into the thermoplastic polymeric material, and the medium occupies 25% to 75% of combined material.

7. The method for making dissolvable synthetic leather as claimed in claim 1, wherein a coloring agent is added into the combined material.

8. The method for making dissolvable synthetic leather as claimed in claim 3, wherein a coloring agent is added into the combined material.

9. The method for making dissolvable synthetic leather as claimed in claim 3, wherein a coloring agent is added into the combined material.

10. The method for making dissolvable synthetic leather as claimed in claim 1, wherein a foaming agent is added into the combined material.

11. The method for making dissolvable synthetic leather as claimed in claim 3, wherein a foaming agent is added into the combined material.

12. The method for making dissolvable synthetic leather as claimed in claim 1, wherein a fire retardant is added into the combined material.

13. The method for making dissolvable synthetic leather as claimed in claim 3, wherein a fire retardant agent is added into the combined material.

14. The method for making dissolvable synthetic leather as claimed in claim 1, wherein an anti fouling and bacterial agent is added into the combined material.

15. The method for making dissolvable synthetic leather as claimed in claim 3, wherein an anti fouling and bacterial agent is added into the combined material.

16. The method for making dissolvable synthetic leather as claimed in claim 1, wherein the size of the powder of the medium is limited between 0.0013 mm to 0.83 mm, and the size of the fiber of the medium is limited between 0.83 mm to 8 mm, the medium occupies 10% to 75% of combined material.

17. The method for making dissolvable synthetic leather as claimed in claim 3, wherein the size of the powder of the medium is limited between 0.0013 mm to 0.83 mm, and the size of the fiber of the medium is limited between 0.83 mm to 8 mm, the medium occupies 10% to 75% of combined material.

## Amended claims

### Amended claims in accordance with Rule 137(2) EPC.

**1.** A method for making dissolvable synthetic leather comprising the steps of:
a. providing combined material, wherein thermoplastic polymeric material and medium are mixed together to generate a combined material, the thermoplastic polymeric material and the medium are dissolvable, and the medium is selected from agricultural and forestry waste, these wastes are mashes into fibers and powders, the agricultural and forestry waste is selected from woods, branches, leaves, rice straws, rice hulls, wheat straws, wheat hulls, corn stems, corn stalks, sugarcane bagasses, and bean dregs, and the size of the powder of the medium is limited between 0.0013 mm to 0.83 mm, and the size of the fiber of the medium is limited between 0.83 mm to 8 mm, the medium occupies 10% to 75% of combined material, and the thermoplastic polymeric material is selected from hydrolysis, dissolvable, harmless dissolving, and microorganisms decomposing material, and then an anti-oxidant, dispersant, and stabilizer are added into the thermoplastic polymeric material, the thermoplastic polymeric material occupies 25% to 75% of combined material;
b. film forming, wherein a thermoplastic film is made of the combined material, and a metal guiding wheel with a cooling system is introduced to rotate for a certain rotating travel so as to convey the thermoplastic film toward a connecting position with a metal roller, such that the thermoplastic film is cooled and pressed evenly, and the cooling system of the guiding wheel controls a temperature value of the thermoplastic film during the film is conveyed toward the roller;
c. joining together, wherein a dissolvable substrate is transported by the roller to be joined with the thermoplastic film with a predetermined temperature to obtain synthetic leather, during joining process, a cooled film is pressed to the substrate so that a surface of the film permeates into pores of the substrate in a monounsaturating manner, the substrate is selected from knit fabric, woven fabric, non-woven fabric, and water-jet fabric with hydrolysis, dissolvable, harmless dissolvable, and microorganisms decomposable property.

**2.** The method for making dissolvable synthetic leather as claimed in claim 1 further comprising the step of surface treating, wherein the guiding wheel is mirror finished or pattern pressed to form a desired surface of synthetic leather, and then the synthetic leather is transfer printed and colored.

**3.** A method for making dissolvable synthetic leather comprising the steps of:
a. providing combined material, wherein thermoplastic polymeric material and medium are mixed together to generate a combined material, the thermoplastic polymeric material and the medium are dissolvable, and the medium is selected from agricultural and forestry waste, these wastes are mashes into fibers and powders, the agricultural and forestry waste is selected from woods, branches, leaves, rice straws, rice hulls, wheat straws, wheat hulls, corn stems, corn stalks, sugarcane bagasses, and bean dregs, and the size of the powder of the medium is limited between 0.0013 mm to 0.83 mm, and the size of the fiber of the medium is limited between 0.83 mm to 8 mm, the medium occupies 10% to 75% of combined material, and the thermoplastic polymeric material is selected from hydrolysis, dissolvable, harmless dissolving, and microorganisms decomposing material, and then an anti-oxidant, dispersant, and stabilizer are added into the thermoplastic polymeric material, the thermoplastic polymeric material occupies 25% to 75% of combined material;
b. film forming, wherein a thermoplastic film is made of the combined material, and a metal guiding wheel with a cooling system is introduced to rotate for a certain rotating travel so as to convey the thermoplastic film toward a connecting position with a metal roller, such that the thermoplastic film is cooled and pressed evenly, and the cooling system of the guiding wheel controls a temperature value of the thermoplastic film during the film is conveyed toward the roller, and then the film is rolled by a guiding wheel to form synthetic leather.

**4.** The method for making dissolvable synthetic leather as claimed in claim 1, wherein a coloring agent is added into the combined material.

**5.** The method for making dissolvable synthetic leather as claimed in claim 2, wherein a coloring agent is added into the combined material.

**6.** The method for making dissolvable synthetic leather as claimed in claim 2, wherein a coloring agent is added into the combined material.

**7.** The method for making dissolvable synthetic leather as claimed in claim 1, wherein a foaming agent is added into the combined material.

**9.** The method for making dissolvable synthetic leather as claimed in claim 2, wherein a foaming agent is added into the combined material.

**9.** The method for making dissolvable synthetic leather as claimed in claim 1, wherein a fire retardant is added into the combined material.

**10.** The method for making dissolvable synthetic leather as claimed in claim 2, wherein a fire retardant agent is added into the combined material.

**11.** The method for making dissolvable synthetic leather as claimed in claim 1, wherein an anti fouling and bacterial agent is added into the combined material.

**12.** The method for making dissolvable synthetic leather as claimed in claim 2, wherein an anti fouling and bacterial agent is added into the combined material.
